# EUROPEAN PATENT SPECIFICATION

(11) **EP 3 129 565 B1**
(45) Date of publication and mention of the grant of the patent: **16.05.2018**
(21) Application number: 15718175.1
(22) Date of filing: 09.04.2015
(51) Int. Cl.: C09D 133/08, E04F 13/02, C09D 201/00, E04G 23/02, E04F 13/00

(54) **PROCESS FOR PREPARING A SURFACE FOR DECORATION**
VERFAHREN ZUM VORBEREITEN EINER OBERFLÄCHE ZUR DEKORATION
PROCÉDÉ DE PRÉPARATION D'UNE SURFACE POUR DÉCORATION

(30) Priority: 09.04.2014 EP 14164035
(43) Date of publication of application: 15.02.2017
(73) Proprietor: Sika Technology AG, 6340 Baar (CH)
(72) Inventor: SCHWERDT, Werner, 48727 Billerbeck (DE)
(74) Representative: Sika Patent Attorneys
(86) International application number: PCT/EP2015/057697
(87) International publication number: WO 2015/155280

(56) References cited:
- EP-A2- 0 138 125
- WO-A2-2006/102406
- GB-A- 2 029 765
- US-A- 3 044 919

## Description

The present invention relates to a process for preparing a surface for decoration. The invention also relates to a surface material employed in the process, a multilayer structure obtainable by the process and to a kit of parts for carrying out the process.

Conventional processes for preparing a surface for decoration such as application of paint or a wall-paper suffer from the disadvantage that they are usually very tedious and time consuming. For newly decorating, e.g., wall surfaces it is regularly necessary to prime the surface, then apply a surfacer, subsequently polish the surfacer then to once more prime the surface to be able to finally apply paint or wall-paper. The application of surfacer, depending on the roughness of the surface to which the surfacer is applied, may have to be repeated to level out the unevenness of the wall's surface. This has the disadvantage that drying times of each surfacer application have to be strictly observed to provide an acceptable result. Moreover, the obtained evenness of the surface strongly depends on the person who does the job.

Other disadvantages of the conventional preparation process is that the polishing of the wall surface involves the production of significant amounts of dust and that it is not possible to eliminate micro-cracks which might occur after drying of the surfacer or paints applied thereon. To shorten the long time usually required to prepare a surface for a subsequent decoration such as applying a paint or a wall paper, a fast and easy process is in demand.

An example of a somewhat improved process in this regard is known from US 3,044,919. This document describes a surfacing or facing construction particularly adaptable for application on wall and ceiling areas or surfaces and to a method or system of applying the surfacing or facing to an area, the construction embodying a thin mat, layer or sheet of mineral material adapted to be adhesively joined to the surface or area to be finished. The process involves the application of an adhesive, paint, mastic or coating material to the obverse face or surface of the mat or sheet of mineral fibres in such a manner that the adhesive, paint, mastic or coating material penetrates through the interstices or pores in the mat to adhesively join the mat or sheet to the wall surface and concomitantly therewith impregnate the mat and form a surface or facing film which is substantially smooth.

There are drawbacks to this known process however, in that it does not provide for the bridging of major cracks or holes in the walls, as they may be encountered in the course of renovation. Furthermore, the process requires the application of an adhesive, paint, mastic or coating material in such a manner that it penetrates through interstices or pores in the mat. As a result of this, there is an ongoing demand for processes to effectively cover cracks and holes in a surface, as well as for processes having an improved overall efficiency.

The invention now provides a process for preparing a building surface for decoration comprising the steps of
a) application of a water-based non-cementitious surfacer material to the building surface, wherein the surfacer comprises:
   i) 5 to 30% by weight of an aqueous dispersion of an organic polymer, said dispersion comprising 30 to 70% by weight of the organic polymer,
   ii) 60 to 90% by weight of a filler, and
   iii) optionally 0 to 30% by weight of additional water, 0 to 2% by weight of a rheology modifier, and 0 to 2% by weight of further additives,
b) application of a glass fibre-based non-woven sheet having an area density in the range of 100 to 250 g/m² onto the wet surfacer, whereby one surface of the sheet is adhered to the wet surfacer.

All amounts in "% by weight" or "wt.-%" in this document are relative to the total weight of the water-based non-cementitious surfacer composition, unless indicated otherwise.

The process according to the invention has the following advantages: First of all, there is no necessity to prepare the surfacer by mixing a solid precursor with water as is necessary with conventional cement or gypsum based surfacer materials. In addition, the surfacer has a suitable pot life (i.e., a time in which it remains sufficiently viscous to allow application to the wall's surface, once a sealed container thereof has been opened) ensuring, that the surfacer can safely be applied to a wall's surface before hardening. On the other hand, the surfacer, once applied, hardens sufficiently fast to allow further work steps in the course of e.g. a renovation. The process in addition has the advantages of a very good and improved covering of cracks in the surface and a very good adhesion to the surface. In total, the process gives rise to increased efficiency, because additional surface preparation steps, such as polishing or other steps to level or flatten the surface, can be omitted. Wall paper or paint can then directly be applied to the surface created in the described process. In the context of the present application, it is thus preferred, that the water-based surfacer is applied in the course of a process which dispenses of leveling or flattening the surface by sanding, polishing or the like.

"Non-cementitious" in the context of the present application is to be construed in that the surfacer does not harden upon curing of a cement filler included therein. For cementitious surfacer materials, a certain amount of cement is usually required to effect hardening of the surfacer by curing of the cement. Conventional cementitious surfacer materials thus regularly comprise 25 wt.-% or more of cementitious material. While it is not excluded, that the non-cementitious surfacer material of the present application comprises some amount of a cementitious material, such as less than 15 wt.-%, preferably less than 10 wt.-% and most preferably less than 5 wt.-%, the compositions of the present application comprise less cement than is required for a cementitious surfacer material. The curing of the material is thus substantially effected by evaporation of water from the aqueous dispersion of the organic polymer which leads to binding between the organic polymer particles, the filler and the optional other constituents of the surfacer material.

In the present application, walls and ceilings are preferred as building surfaces.

The water-based non-cementitious surfacer material comprises an aqueous dispersion of an organic polymer. Examples of suitable organic polymers are any polymers which are capable for forming aqueous dispersions such as, in particular, styrene acrylate copolymers, acrylic acid esters, styrene copolymerisates, acryl-methacrylic acid ester copolymerisates, vinyl acetate copolymers, styrenebutadiene copolymers and ethylene-vinyl acetate copolymers. Among these styrene acrylate copolymers and acrylic acid esters are preferred. As is stated above, the content of the aqueous dispersion of the organic polymer in the surfacer material ranges from 5 to 30% by weight, preferably from 8 to 25% by weight and most preferably from 10 to 20 by weight.

In addition, it is preferred, that the dispersion comprises 40 to 60% by weight of the organic polymer with 50 ± 5% by weight being most preferred.

The surfacer further comprises a filler. As a filler, conventional fillers suitable for polymeric resin-based surfacer materials can be employed such as in particular, calcium carbonate, preferably with a particle size range of 1 to 300 µm, especially 1 to 200 µm and most preferably 5 to 100 µm. Other suitable filler include calcium/magnesium carbonate, fine sand with a particle size of up to 0.3 mm, silicates and quartz powder.

A filler, as this term is used in the present application, is a material which is nonreactive towards other constituents. Hence, the term filler does not encompass water absorbing materials such as gypsum hemihydrate (CaSO₄ x ½ H₂O) or gypsum anhydride. While it is not excluded that the surfacer material of the present application comprises such materials, their amount is limited to less than 15 wt.-%, preferably less than 10 wt.-%, more preferably less than 7 wt.-% and most preferably less than 5 wt.-%.

The filler may also comprise a light-weight filler. Light-weight fillers typically have a density of less than 2,000 kg/m³, preferably less than 1,500 g/m³, and particularly preferred less than 1,200 kg/m³. Examples of suitable light-weight fillers are small hollow spheres of glass, ceramic material or polymeric material; sintered foam glass; expanded mica; expanded or foamed clay; and expanded slate. Particularly suitable light-weight fillers are amorphous hollow spheres of up to 0.3 mm in diameter (sold, e.g., as Fillite by Omya AG), microspheres of a thermoplastic material with a density of 25 to 70 kg/m³ (sold, e.g., under the name Expancel by Akzo Nobel), aluminum silicates, fly ash, perlite and glass hollow spheres sold, e.g., as 3M glass bubbles by 3M. The light-weight filler, if present, is used in an amount of up to 70% by weight, based on the total weight of the filler in the surfacer material, preferably 5 to 50% by weight and typically 8 to 40% by weight, and most preferably 10 to 30% by weight.

As indicated above, the surfacer material comprises an aqueous polymeric dispersion, which in itself comprises water as the dispersing agent. In addition to this water, additional water in up to 30% by weight may be added to adjust the viscosity and handling properties of the resulting surfacer material. To avoid extensive lengthening of the drying/hardening time of the surfacer material, it is however advisable that a maximum amount of 30 wt.-% of added additional water is not exceeded. Preferably, the amount of added water is about 20 wt.-% or less, more preferably 10 wt.-% or less.

The surfacer material may comprise a rheology modifier such as, e.g., methyl cellulose. The amount of this additive can usually be relatively low to achieve the desired effect, i.e., an amount of up to 2 wt.-% of the rheology modifier will regularly be sufficient with amounts of 0.1 to 1.5 wt.-% being preferred. The surfacer may also comprise further additives in known amounts in order to optimize the properties. Examples of suitable additives are curing accelerators, curing retarders, preservatives, pigments, waxing agents, dispersants, fibers, anti-foaming agents and additives to impart hydrophobicity to the surfacer.

The surfacer is typically provided as a wet paste, wherein the above-mentioned components i), ii), and iii) add up to 100 wt.-%. The viscosity of the surfacer can vary, and is suitably adjusted depending on the type of surface to be prepared. Large cracks or deep holes in the surface to be prepared, or a higher layer thickness of the surfacer will generally require a higher viscosity surfacer and thus regularly a lower amount of water in the surfacer.

The preferred application technique may also influence the desired optimum viscosity. The surfacer can be applied to the building surface by any suitable method, such as spraying, rolling, or using a trowel or a brush. The surfacer can be applied with conventional application equipment.

Examples of suitable building surfaces are concrete surfaces, brick walls, tiles, wood, plaster and plaster boards and existing coating layers.

Needless to say, the surface should have sufficient mechanical stability. It is preferred that significant amounts of dirt and debris are removed from the surface. Therefore, in certain embodiments, the process of the invention comprises the additional step of cleaning the building surface and/or removing non-sustainable layers from the building surface prior to application of the water-based surfacer material.

While this will not be necessary in most cases, a primer may be applied to a surface, such as preferably a wall, before applying the surfacer thereon.

The amount of surfacer applied depends on the structure of the surface. When the surface is relatively even and free of large cracks or holes, the amount of wet surfacer applied usually is in the range of 100 g/m² to 2,000 g/m², preferably 300 g/m² to 1,200 g/m². When the surface is relatively uneven and/or highly structured with cracks and holes, the amount of wet surfacer applied is in the range of 500 g/m² to 3,000 g/m², typically in the range of 1,000 g/m² to 2,000 g/m².

In the process of the invention use is made of a glass fibre-based non-woven sheet having an area density in the range of 100 to 250 g/m², preferably the area density of the sheet is in the range 110 to 150 g/m².

The glass fibre-based non-woven sheet may have an organic coating, for example by application of an aqueous dispersion or organic solvent solution of an organic polymer.

In a preferred embodiment, the glass fibre-based non-woven sheet comprises an organic coating only on one major surface of the sheet and a second substantially untreated surface. In that case, the sheet is suitably applied to the wet surfacer, so that the untreated sheet surface faces the wet surfacer.

In certain embodiments, it can be advantageous to treat the wet surfacer with a notched trowel or a toothed spatula prior to application of the glass fibre-based non-woven sheet.

The glass fibre-based non-woven sheet can be applied manually to the wet surfacer. Pressing the sheet slightly on the wet surfacer is generally sufficient to adhere the sheet to the surfacer. It should be noted that the sheet generally remains on the surfacer, rather than being pressed into the surfacer layer. Preferably, the pressure applied to the sheet is such that penetration of the wet surfacer through the interstices or pores of the sheet is minimized or entirely prevented.

As mentioned above, the process of the invention is very suitable for preparing a building surface for decoration. In one embodiment, the building surface may be an exterior building surface. Alternatively, the surface may be an interior building surface, such as a wall or ceiling. Examples of suitable decoration steps following the process of the invention are the application of paint, such as a wall paint or a wall paper. Due to the excellent covering of cracks, holes, and other surface imperfections, the process can be implemented with particular advantage for renovation purposes of existing or old buildings.

The invention also relates to the use of a water-based non-cementitious surfacer material comprising
i) 5 to 30% by weight of an aqueous dispersion of an organic polymer, said dispersion comprising 30 to 70% by weight of the organic polymer,
ii) 60 to 90% by weight of a filler, and
iii) optionally 0 to 30% by weight of additional water, 0 to 2% by weight of rheology modifiers, and 0 to 2% by weight of further additives
in the preparation of a building surface as a supporting layer for a glass-fibre non-woven sheet. Said sheet may advantageously have an area density in the range of 100 to 250 g/m³.

In a preferred embodiment of this use, the water-based non-cementitious surface material consists essentially of the mentioned ingredients, i.e., the surfacer material may comprise up to 5 wt.-%, preferably up to 2 wt.-%, and most preferably up to 1 wt.-% of additional constituents, which do however not affect the general characteristics of the material. In a yet more preferred embodiment, the water-based non-cementitious surfacer material consists of the ingredients mentioned under i) through iii).

In a further preferred embodiment, , the filler in the water-based non-cementitious surfacer material as indicated above comprises up to 70% by weight, more preferably 5 to 50 % by weight, and in particular 15 to 40 % by weigth of a light-weight filler. For details and preferred embodiments of the light-weight filler, further ingredients of the water-based non-cementitious surfacer material and preferred embodiments of the glass-fibre non-woven sheet is referred to the above description.

The invention also relates to a multi-layer structure which can be obtained by the above-indicated process. The structure comprises a) a surfacer layer obtainable by hardening a layer of a water-based non-cementitious material as indicated above, and b) a glass fibre-based non-woven sheet having an area density in the range of 100 to 250 g/m², and wherein one surface of the sheet adhered to the surface layer. Preferably, the multilayer structure further comprises a supporting layer, such as e.g. a wall or ceiling, onto which the surface is applied.

In a yet further embodiment, the present invention relates to a kit of parts suitable for carrying out the above-indicated process. This kit comprises a) a water-based non-cementitious surfacer material as indicated above, and b) a glass fibre-based non-woven sheet having an area density in the range of 100 to 250 g/m².

## Claims

1. A process for preparing a building surface for decoration comprising the steps of
a) application of a water-based non-cementitious surfacer material to the building surface, wherein the surfacer comprises:
i) 5 to 30% by weight of an aqueous dispersion of an organic polymer, said dispersion comprising 30 to 70% by weight of the organic polymer,
ii) 60 to 90% by weight of a filler, and
iii) optionally 0 to 30% by weight of additional water, 0 to 2% by weight of rheology modifiers, and 0 to 2% by weight of further additives,
b) application of a glass fibre-based non-woven sheet having an area density in the range of 100 to 250 g/m² onto the wet surfacer, whereby one surface of the sheet is adhered to the wet surfacer.

2. The process according to claim 1, wherein the glass fibre-based non-woven sheet comprises an organic coating on one major surface of the sheet and a second substantially untreated surface, and wherein the untreated surface faces the wet surfacer.

3. The process according to claim 1 or 2, wherein the process comprises the additional step of cleaning the building surface and/or removing non-sustainable layers from the building surface prior to application of the water-based surfacer material.

4. The process according to any one of the preceding claims, wherein a base layer is applied prior to application of the water-based surfacer material.

5. The process according to any one of the preceding claims, wherein the filler in the surfacer material comprises a light-weight filler having a density of less than 2,000 kg/m³

6. The process according to any one of the preceding claims, wherein the decoration comprises applying a wall paper or a wall paint.

7. The process according to any one of the preceding claims, wherein the building surface is an interior surface of a building.

8. The process according to any one of the preceding claims, wherein the process is implemented for renovation purposes.

9. The process according to any one of the preceding claims, wherein the surfacer is applied by spraying, rolling, or using a trowel or a brush.

10. The process according to any one of the preceding claims, wherein the wet surfacer is treated with a notched trowel or a toothed spatula.

11. Use of a water-based non-cementitious surfacer material comprising
i) 5 to 30% by weight of an aqueous dispersion of an organic polymer, said dispersion comprising 30 to 70% by weight of the organic polymer,
ii) 60 to 90% by weight of a filler, and
iii) optionally 0 to 30% by weight of additional water, 0 to 2% by weight of rheology modifiers, and 0 to 2% by weight of further additives
in the preparation of a building surface as a supporting layer for a glass-fiber non-woven sheet.

12. Use according to claim 11, wherein the filler in the water-based non-cementitious surfacer material comprises up to 70% by weight of a light weight filler.

13. A multilayer structure comprising
a) a surfacer layer obtainable by hardening a layer of a water-based non-cementitious surfacer material according to claims 11 or 12, and
b) a glass fibre-based non-woven sheet having an area density in the range of 100 to 250 g/m², wherein one surface of the sheet is adhered to the surfacer layer.

14. A kit of parts for preparing a building surface for decoration comprising
a) a water-based non-cementitious surfacer material as described in claims 11 or 12, and
b) a glass fibre-based non-woven sheet having an area density in the range of 100 to 250 g/m².

## Patentansprüche

1. Verfahren zum Vorbereiten einer Gebäudeoberfläche zur Dekoration, umfassend die Schritte
a) Aufbringen eines nicht zementhaltigen Spachtelmassematerials auf Wasserbasis auf die Gebäudeoberfläche, wobei die Spachtelmasse umfasst:
i) 5 bis 30 Gew.-% einer wässrigen Dispersion eines organischen Polymers, wobei die Dispersion 30 bis 70 Gew.-% des organischen Polymers umfasst,
ii) 60 bis 90 Gew.-% eines Füllstoffs und
iii) gegebenenfalls 0 bis 30 Gew.-% zusätzliches Wasser, 0 bis 2 Gew.-% Rheologiemodifikatoren und 0 bis 2 Gew.-% weiterer Zusatzstoffe,
b) Aufbringen einer Vlieslage auf Glasfaserbasis mit einer Flächendichte in dem Bereich von 100 bis 250 g/m² auf die feuchte Spachtelmasse, wodurch eine Oberfläche der Lage an der feuchten Spachtelmasse haftet.

2. Verfahren gemäß Anspruch 1, wobei die Vlieslage auf Glasfaserbasis eine organische Beschichtung auf einer Hauptoberfläche der Lage und eine zweite, im Wesentlichen unbehandelte Oberfläche umfasst, und wobei die unbehandelte Oberfläche der feuchten Spachtelmasse zugewandt ist.

3. Verfahren gemäß Anspruch 1 oder 2, wobei das Verfahren den zusätzlichen Schritt des Reinigens der Gebäudeoberfläche und/oder Entfernens von nicht dauerhaften Schichten von der Gebäudeoberfläche vor dem Aufbringen des Spachtelmassematerials auf Wasserbasis umfasst.

4. Verfahren gemäß einem der vorstehenden Ansprüche, wobei vor dem Aufbringen des Spachtelmassematerials auf Wasserbasis eine Grundschicht aufgebracht wird.

5. Verfahren gemäß einem der vorstehenden Ansprüche, wobei der Füllstoff in dem Spachtelmassematerial einen Leichtfüllstoff mit einer Dichte von weniger als 2.000 kg/m³ umfasst.

6. Verfahren gemäß einem der vorstehenden Ansprüche, wobei die Dekoration Aufbringen einer Tapete oder einer Wandfarbe umfasst.

7. Verfahren gemäß einem der vorstehenden Ansprüche, wobei die Gebäudeoberfläche eine Innenoberfläche eines Gebäudes ist.

8. Verfahren gemäß einem der vorstehenden Ansprüche, wobei das Verfahren für Renovierungszwecke eingesetzt wird.

9. Verfahren gemäß einem der vorstehenden Ansprüche, wobei die Spachtelmasse durch Sprühen, Walzen oder unter Verwendung einer Kelle oder einer Bürste aufgebracht wird.

10. Verfahren gemäß einem der vorstehenden Ansprüche, wobei die feuchte Spachtelmasse mit einer gekerbten Kelle oder einem gezahnten Spachtel behandelt wird.

11. Verwendung eines nicht zementhaltigen Spachtelmassematerials auf Wasserbasis, umfassend
i) 5 bis 30 Gew.-% einer wässrigen Dispersion eines organischen Polymers, wobei die Dispersion 30 bis 70 Gew.-% des organischen Polymers umfasst,
ii) 60 bis 90 Gew.-% eines Füllstoffs und
iii) gegebenenfalls 0 bis 30 Gew.-% zusätzliches Wasser, 0 bis 2 Gew.-% Rheologiemodifikatoren und 0 bis 2 Gew.-% weiterer Zusatzstoffe,
bei der Vorbereitung einer Gebäudeoberfläche als Trägerschicht für eine Glasfaser-Vlieslage.

12. Verwendung gemäß Anspruch 11, wobei der Füllstoff in dem nicht zementhaltigen Spachtelmassematerial auf Wasserbasis bis zu 70 Gew.-% eines Leichtfüllstoffs umfasst.

13. Mehrschichtige Struktur, umfassend
a) eine Spachtelmasseschicht, erhältlich durch Aushärten einer Schicht eines nicht zementhaltigen Spachtelmassematerials auf Wasserbasis gemäß Ansprüchen 11 oder 12 und
b) eine Vlieslage auf Glasfaserbasis mit einer Flächendichte in dem Bereich von 100 bis 250 g/cm², wobei eine Oberfläche der Lage an der Spachtelmasseschicht haftet.

14. Kit-of-Parts zum Vorbereiten einer Gebäudeoberfläche zur Dekoration, umfassend
a) ein nicht zementhaltiges Spachtelmassematerial auf Wasserbasis gemäß Ansprüchen 11 oder 12 und
b) eine Vlieslage auf Glasfaserbasis mit einer Flächendichte in dem Bereich von 100 bis 250 g/cm².

## Revendications

1. Procédé de préparation d'une surface de bâtiment pour la décoration, comprenant les étapes qui consistent à :
a) appliquer un matériau d'apprêt surfaçant non cimentaire à base d'eau sur la surface du bâtiment, l'apprêt surfaçant comprenant :
i) 5 à 30 % en poids d'une dispersion aqueuse d'un polymère organique, ladite dispersion comprenant 30 à 70 % en poids du polymère organique,
ii) 60 à 90 % en poids d'une charge, et
iii) optionnellement, 0 à 30 % en poids d'eau additionnelle, 0 à 2 % en poids de modificateurs rhéologiques, et 0 à 2 % en poids d'additifs supplémentaires,
b) appliquer une feuille de non-tissé à base de fibres de verre ayant une masse surfacique de 100 à 250 g/m² sur l'apprêt surfaçant humide, une surface de la feuille étant ainsi collée sur l'apprêt surfaçant humide.

2. Procédé selon la revendication 1, dans lequel la feuille de non-tissé à base de fibres de verre comprend un revêtement organique sur une surface principale de la feuille et une deuxième surface sensiblement non traitée, et dans lequel la surface non traitée fait face à l'apprêt surfaçant humide.

3. Procédé selon la revendication 1 ou 2, le procédé comprenant l'étape additionnelle de nettoyage de la surface du bâtiment et/ou d'élimination des couches non durables de la surface du bâtiment avant l'application du matériau d'apprêt surfaçant à base d'eau.

4. Procédé selon l'une quelconque des revendications précédentes, dans lequel une couche de base est appliquée avant l'application du matériau d'apprêt surfaçant à base d'eau.

5. Procédé selon l'une quelconque des revendications précédentes, dans lequel la charge dans le matériau d'apprêt surfaçant comprend une charge légère ayant une densité inférieure à 2 000 kg/m³.

6. Procédé selon l'une quelconque des revendications précédentes, dans lequel la décoration comprend l'application d'un papier peint ou d'une peinture murale.

7. Procédé selon l'une quelconque des revendications précédentes, dans lequel la surface du bâtiment est une surface intérieure d'un bâtiment.

8. Procédé selon l'une quelconque des revendications précédentes, le procédé étant mis en oeuvre à des fins de rénovation.

9. Procédé selon l'une quelconque des revendications précédentes, dans lequel l'apprêt surfaçant est appliqué par pulvérisation, au rouleau, ou en utilisant une truelle ou une brosse.

10. Procédé selon l'une quelconque des revendications précédentes, dans lequel l'apprêt surfaçant humide est traité avec une truelle brettée ou une spatule à dents.

11. Utilisation d'un matériau d'apprêt surfaçant non cimentaire à base d'eau comprenant :
i) 5 à 30 % en poids d'une dispersion aqueuse d'un polymère organique, ladite dispersion comprenant 30 à 70 % en poids du polymère organique,
ii) 60 à 90 % en poids d'une charge, et
iii) optionnellement, 0 à 30 % en poids d'eau additionnelle, 0 à 2 % en poids de modificateurs rhéologiques, et 0 à 2 % en poids d'additifs supplémentaires,
dans la préparation d'une surface de bâtiment, comme couche de support pour une feuille de non-tissé à base de fibres de verre.

12. Utilisation selon la revendication 11, dans laquelle la charge dans le matériau d'apprêt surfaçant non cimentaire à base d'eau comprend jusqu'à 70 % en poids d'une charge légère.

13. Structure multicouche comprenant :
a) une couche d'apprêt surfaçant pouvant être obtenue par durcissement d'une couche d'un matériau d'apprêt surfaçant non cimentaire à base d'eau selon les revendications 11 ou 12, et
b) une feuille de non-tissé à base de fibres de verre ayant une masse surfacique de 100 à 250 g/m², une surface de la feuille étant collée sur la couche d'apprêt surfaçant.

14. Kit de pièces pour la préparation d'une surface de bâtiment pour la décoration, comprenant :
a) un matériau d'apprêt surfaçant non cimentaire à base d'eau tel que décrit dans les revendications 11 ou 12, et
b) une feuille de non-tissé à base de fibres de verre ayant une masse surfacique de 100 à 250 g/m².
